Europäisches Patentamt

European Patent Office

Office européen des brevets

(19)

(11) Veröffentlichungsnummer: **0 338 414**

**A2**

(12) # EUROPÄISCHE PATENTANMELDUNG

(21) Anmeldenummer: 89106565.8

(51) Int. Cl.⁴: **B60T 8/32**

(22) Anmeldetag: 13.04.89

(30) Priorität: 18.04.88 DE 3812903

(43) Veröffentlichungstag der Anmeldung:
25.10.89 Patentblatt 89/43

(84) Benannte Vertragsstaaten:
DE ES FR GB IT

(71) Anmelder: LUCAS INDUSTRIES public limited company
Great King Street
Birmingham, B19 2XF West Midlands(GB)

(72) Erfinder: Braschel, Volker
Fliedergarten 57
D-5450 Neuwied 1(DE)
Erfinder: Schmitt, Hubert
Mohlenweg 40
D-5405 Ochtendong(DE)
Erfinder: Roller, Dieter
Höhenstrasse 14
D-5450 Neuwied 12(DE)

(74) Vertreter: von Hellfeld, Axel, Dipl.-Phys. Dr. et al
Patentanwälte Wuesthoff- v. Pechmann-Behrens-Goetz Schweigerstrasse 2
D-8000 München 90(DE)

(54) Verfahren zum Regeln des Bremsdruckes in einer ABS-Bremsanlage.

(57) Ein Verfahren zum Regeln des Bremsdruckes in einer blockiergeschützten Fahrzeug-Bremsanlage sieht zur Anpassung des gebremsten Rades an den optimalen Verlauf der Reibbeiwert/Schlupf-Kurve vor, daß nach Einleitung einer Bremsung jeweils nach vorgegebenen Zeitintervallen die Drehverzögerung des gebremsten Rades bestimmt und mit der Drehverzögerung des vorangegangenen Zeitintervalls verglichen wird, und daß die Änderung des Bremsdruckes in Abhängigkeit von dem Vergleichsergebnis durchgeführt wird. Auch die Wiederbeschleunigung des gebremsten Rades wird entsprechend überwacht, um bei zu geringer Wiederbeschleunigung oder zu geringer Beschleunigungszunahme einen weiteren Druckabbau durchzuführen.

FIG. 1

## Verfahren zum Regeln des Bremsdruckes in einer ABS-Bremsanlage

Die Erfindung betrifft ein Verfahren zum Regeln des Bremsdruckes in einer blockiergeschützten Fahrzeug-Bremsanlage, bei dem das Drehverhalten eines gebremsten Rades gemessen und dann, wenn sein Schlupf und/oder seine Drehverzögerung vorgegebene Schwellenwerte überschreiten, der Bremsdruck geändert wird.

Bei herkömmlichen blockiergeschützten Fahrzeug-Bremsanlagen wird die Drehung der einzelnen Räder des Fahrzeuges ständig verfolgt und insbesondere der Schlupf der gebremsten Räder sowie ihre Verzögerung ermittelt, um eine Blockierneigung des Rades festzustellen und das Blockieren zu verhindern. Sobald der Radschlupf bzw. die Verzögerung eine Blockierneigung anzeigen, was dadurch festgestellt wird, daß bestimmte, vorgegebene Schwellenwerte bezüglich Schlupf und/oder Verzögerung überschritten werden, wird ein weiterer Anstieg des Druckes in der Bremse des betroffenen Rades beendet oder der Bremsdruck abgebaut.

Die grundlegenden Prinzipien des Aufbaus und der Funktion von blockiergeschützten Fahrzeug-Bremsanlagen können als bekannt vorausgesetzt werden und sind z.B. in "BOSCH TECHNISCHE BERICHTE", Bd. 7, 1980, Heft 2, S. 65 bis 94 (entsprechend Bosch Technological Reports, English special edition, February 1982, ISSN 0006-789 X), beschrieben.

Bei der blockiergeschützten Regelung des Bremsdruckes geht es wesentlich darum, über alle Regelzyklen einer Bremsung die Umfangsgeschwindigkeit der gebremsten Räder möglichst im günstigsten Bereich der bekannten Haftbeiwert/Schlupf-Kurve zu halten.

Um eine Bremsung mit möglichst kurzem Bremsweg bei gleichzeitiger Lenkbarkeit des Fahrzeuges zu erreichen, wird angestrebt, daß die Antiblockierregelung möglichst empfindlich und verzögerungsfrei auf eine Blockierneigung anzeigende Änderung im Drehverhalten des gebremsten Rades reagiert.

Beim Stand der Technik werden hierzu die Schwellenwerte, bei denen eine Änderung des Bremsdruckverlaufes (Druckabbau, Druckkonstanthaltung oder Druckaufbau) erfolgt, möglichst eng (empfindlich) eingestellt. Einer derart empfindlichen Einstellung der Schwellwerte sind aber dort aus verschiedenen Gründen Grenzen gesetzt.

Maßgeblich für den bei einer Bremsung erzielbaren kürzesten Bremsweg bei gleichzeitiger Lenkstabilität des Fahrzeuges ist der Haftbeiwert $\mu$ zwischen der Fahrbahn und dem Reifen des gebremsten Rades. Der Haftbeiwert wird in der Literatur deshalb auch häufig als "Bremskraftbeiwert" bezeichnet. Der Haftbeiwert $\mu$ ist als Funktion des Schlupfes neben vielen Parametern, wie insbesondere der Reifenkonstruktion, dem Reifenprofil, der Aufstandskraft und dem Reifendruck, wesentlich auch von der Fahrbahnbeschaffenheit (ob trocken, naß oder vereist) abhängig.

In der in der Regel einen charakteristischen Verlauf aufweisenden Reibbeiwert/Schlupf-Kurve werden gewöhnlich (siehe obiges Literaturzitat) sogenannte "Stabilitätsbereiche" von "Instabilitätsbereichen" unterschieden. Läuft das gebremste Rad auf dem ansteigenden Zweig der Bremskraftbeiwert/Schlupf-Kurve, so ist es "stabil" und hat eine gute Seitenführung, während es auf dem abfallenden Zweig der Bremskraftbeiwert/Schlupf-Kurve "in stabil" ist und eine schlechte Seitenführung aufweist. Eine Rückführung des Rades vom instabilen Zustand in den stabilen Zustand erfordert eine sehr starke Reduzierung des Bremsmomentes (Druckabbau).

Um einen möglichst kurzen Bremsweg bei gleichzeitig guter Lenkbarkeit des Fahrzeuges zu erreichen, müssen deshalb die gebremsten Räder im stabilen Bereich, aber nahe dem Übergang zur Instabilität gehalten werden.

Um eine solche Anpassung zu erzielen, ist im Stand der Technik vorgesehen, daß sich an eine erste Phase der Druckabsenkung (nach Überschreiten bestimmter Schwellwerte bezüglich Schlupf und/oder Drehverzögerung des gebremsten Rades) eine zweite Phase anschließt, in welcher der Bremsdruck konstant gehalten wird. Wird nach dieser zweiten Phase immer noch eine zu hohe Drehverzögerung des Rades oder ein zu hoher Schlupf ermittelt, wird der Bremsdruck weiter abgebaut. Dabei kann sowohl die Länge der Druckabbauphase als auch die Länge der sich anschließenden Haltephase von der gemessenen Drehverzögerung des Rades abhängig gemacht werden.

Die im Stand der Technik bekannten Verfahren weisen allerdings bei einer Vielzahl von Bedingungen den Nachteil auf, daß der Druckabbau zu spät beendet wird. Es erfolgt also eine sogenannte Unterbremsung, bei der Bremsweg verschenkt wird. Andererseits kann auch der Druckabbau zu früh beendet werden, was ebenfalls zur Folge hat, daß bei der Bremsung unnötig lange Phasen auftreten, in denen das Rad nicht im optimalen Bereich der Reibbeiwert/Schlupf-Kurve läuft.

Aus der DE-22 64 141 C2 ist ein ABS-Regelverfahren bekannt, bei dem die Zeitachse inkrementiert wird. Dort wird in Perioden konstanten Bremsdruckes die Radverzögerung bestimmt und festgestellt, ob die Radverzögerung abnimmt (oder konstant bleibt) oder ob die Radverzögerung zunimmt. In Abhängigkeit davon, ob eine abnehmende oder eine zunehmende Radverzögerung festgestellt wird, erfolgt die Bremsdrucksteuerung. Bei diesen bekannten Verfahren erfolgt der Vergleich der Radverzögerungen absolut, d.h. die Feststellung, ob eine abnehmende oder eine zunehmende Radverzögerung vorliegt, bezieht sich ausschließlich auf das Vorzeichen der Radverzögerung, also darauf, ob eine Verzögerung oder eine Beschleunigung des Rades vorliegt. Es erfolgt kein Vergleich zwischen Radverzögerungen (oder Beschleunigungen) in aufeinanderfolgenden Zeitintervallen. Nimmt bei diesem Stand der Technik in einer Bremsdruckphase mit konstantem Bremsdruck die Radverzögerung ab, so befindet sich das gebremste Rad im stabilen Bereich der Reibbeiwert/Schlupf-Kurve. Steigt hingegen bei konstantem Bremsdruck die Radverzögerung an, so wird daraus geschlossen, daß sich das Rad im instabilen Bereich der Reibbeiwert/Schlupf-Kurve befindet, so daß der Bremsdruck abgesenkt werden muß. Somit erfolgt bei dieser bekannten ABS-Regelung ausschließlich ein Vergleich von Meßgrössen, die gemessen werden, wenn ein konstanter Bremsdruck vorliegt. Auch erfolgt kein Vergleich von Änderungen der Drehbewegung des Rades von einem Zeitintervall zum nachfolgenden Zeitintervall, sondern es erfolgt nur ein Vergleich der Meßwerte mit Absolutwerten.

Der Erfindung liegt deshalb die Aufgabe zugrunde, ein Verfahren zum Regeln des Bremsdruckes in einer blockiergeschützten Fahrzeug-Bremsanlage anzugeben, bei dem das gebremste Rad möglichst nahe am optimalen Wert der Reibbeiwert/Schlupf-Kurve bleibt.

Erfindungsgemäß wird diese Aufgabe dadurch gelöst, daß nach Einleitung einer Bremsung jeweils nach vorgegebenen Zeitintervallen die Drehverzögerung des gebremsten Rades bestimmt und mit der im vorangegangenen Zeitintervall gemessenen Drehverzögerung verglichen wird, und daß die Änderung des Bremsdruckes in Abhängigkeit von dem Vergleichsergebnis erfolgt.

Während beim Stand der Technik über alle Regelzyklen einer Bremsung die Änderung des Bremsdruck-Verlaufes in Abhängigkeit davon erfolgt, ob das gebremste Rad bestimmte Schwellwerte überschreitet, beschreitet die Erfindung also einen gänzlich anderen Weg. Nach Beginn einer Bremsung wird der gesamte Zeitverlauf in kurze Zeitintervalle von etwa 3 bis 20 Millisekunden (ms) aufgeteilt. Bevorzugt werden Zeitintervalle von 5-10 ms gewählt. Es wird dann für jedes Zeitintervall die Drehverzögerung und/oder die Drehbeschleunigung ermittelt und mit derjenigen aus dem vorangegangenen Zeitintervall verglichen. Statt des Überschreitens bestimmter Schwellwerte (wie beim Stand der Technik) wird nun erfindungsgemäß der Bremsdruck in Abhängigkeit von dem Vergleichsergebnis gesteuert.

Erfindungsgemäß wird also die Zeitachse inkrementiert und es werden die jeweils in zwei benachbarten Zeitintervallen (abgesehen vom ersten Zeitintervall, versteht sich) gemessenen Werte bezüglich des Drehverhaltens als Steuerparameter für den Bremsdruck herangezogen. Es wird also, mit anderen Worten, der Gradient des Verlaufes der Rad-Drehgeschwindigkeit über der Zeit als maßgebliche Steuergröße für den Bremsdruck herangezogen.

Eine Inkrementierung der Zeitachse bei einem Antiblockiersystem ist bereits aus der DE-OS 32 01 929 bekannt, dient jedoch dort zu anderen Zwecken.

In einer bevorzugten Ausgestaltung der Erfindung ist vorgesehen, daß dann, wenn der Vergleich ergibt, daß sich die Drehverzögerung im zuletzt abgelaufenen Zeitintervall gegenüber derjenigen im vorangegangenen Zeitintervall um weniger als einen vorgegebenen Wert verringert hat, während zumindest eines Teils des kommenden Zeitintervalls der Bremsdruck abgesenkt wird.

Erfindungsgemäß wird also, mathematisch gesprochen, der Differenzenquotient der Verzögerung über der Zeit gebildet. Es ist auch möglich, das erfindungsgemäße Verfahren derart zu realisieren, daß, rein mathematisch, der Differentialquotient gebildet und seine Änderung beobachtet wird. Das erfindungsgemäße Verfahren hat eine extrem kurze "Relaxationszeit", d.h. die ABS-Anlage reagiert, im Vergleich mit herkömmlichen Regelungen, extrem schnell auf Änderungen des Fahrbahnzustandes. Bei herkömmlichen Regelverfahren ist eine solche schnelle Änderung aus verschiedenen Gründen nicht erwünscht und wird deshalb ausgefiltert. Beim erfindungsgemäßen Verfahren hingegen ist eine Änderung des Regelzustandes innerhalb weniger Millisekunden möglich und erwünscht.

Um am Beginn einer Bremsung das Rad in einen günstigen Bereich der Reibbeiwert/Schlupf-Kurve zu zwingen, ist in einer bevorzugten Ausgestaltung des erfindungsgemäßen Verfahrens vorgesehen, daß für eine vorgegebene Zeitspanne ab dem Beginn einer Bremsung, wobei diese Zeitspanne länger ist als das erfindungsgemäß vorgesehene Zeitintervall der Inkrementierung, in herkömmlicher Weise Schwellwerte bezüglich Schlupf und/oder Verzögerung des gebremsten Rades vorgegeben werden (beispielsweise ein Schwellwert von 1,5 g bezüglich der Verzögerung und ein Schwellwert von 20 % bezüglich des Schlupfes), welche erst überschritten werden müssen, wonach dann die erfindungsgemäße Regelung mit vorgegebenen Zeitintervallen und Vergleich der Drehverzögerungen von Zeitintervall zu Zeitintervall einsetzt.

In einer weiteren Ausgestaltung der Erfindung ist zur Vermeidung, daß ein instabiles Rad unterbremst wird, vorgesehen, daß dann, wenn der Vergleich ergibt, daß sich die Drehverzögerung im zuletzt abgelaufenen Zeitintervall gegenüber derjenigen im vorangegangenen Zeitintervall um mehr als einen vorgegebenen Wert verringert hat, die Absenkung des Bremsdruckes beendet wird.

Um ein instabil gewordenes Rad wieder möglichst schnell in den stabilen Bereich der Reibbeiwert/Schlupf-Kurve zu bringen, wird auch die nach einer Druckabsenkung erfolgende Wiederbeschleunigungsphase des Rades beobachtet. Hierzu ist vorgesehen, daß nach Einleitung einer Bremsung jeweils nach vorgegebenen Zeitintervallen die Drehbeschleunigung des gebremsten Rades bestimmt und mit der während zumindest eines vorangegangenen Zeitintervalls gemessenen Drehbeschleunigung verglichen wird, und daß die Änderung des Bremsdruckes in Abhängigkeit von dem Vergleichsergebnis erfolgt.

Ist also der Absolutwert der Wiederbeschleunigung des Rades zu klein oder ist keine Zunahme der Wiederbeschleunigung zu beobachten, so wird der Bremsdruck auch dann noch weiter abgesenkt, wenn das Rad bereits wiederbeschleunigt. Es gelangt deshalb schneller in den optimalen Bereich der Reibbeiwert/Schlupf-Kurve.

Eine derartige Absenkung des Bremsdruckes in der Wiederbeschleunigungsphase wird in einer bevorzugten Ausgestaltung der Erfindung nur dann vorgenommen, wenn sich das Rad noch im Schlupf befindet. Es wird deshalb der Schlupf des gebremsten Rades laufend beobachtet und festgestellt, ob er größer ist als ein vorgegebener Wert oder nicht.

Würde eine weitere Druckabsenkung am gebremsten Rad während einer Wiederbeschleunigungsphase erfolgen, wenn sich das Rad nicht mehr in hinreichendem Schlupf befindet, so würde auch dann ein zusätzlicher Druckabbau erfolgen, wenn das Rad bereits stabil wird, da beim Übergang in den Stabilitätsbereich zwangsläufig die Wiederbeschleunigung geringer wird.

Es gibt jedoch auch Fahrbahnen mit relativ niedrigem Reibbeiwert, auf denen die Wiederbeschleunigung des Rades bereits bei hohen Schlupf desselben wieder kleiner wird. In diesem Fall besteht die Gefahr, daß die ABS-Regelanlage zu früh ein vermeintlich wieder stabil laufendes Rad anzeigt und bereits in hohem Schlupf wieder auf Druckaufbau schaltet. Dabei kann es zu einem unerwünscht frühzeitigem Blockieren der Räder kommen. Um dies zu vermeiden, muß auch während einer Wiederbeschleunigungsphase des Rades ein Abbau des Bremsdruckes unter bestimmten Umständen auch dann möglich sein, wenn bei zu tief errechneter Referenzgeschwindigkeit kein Schlupf errechnet wird, obwohl sich das Rad tatsächlich im Schlupf befindet.

Die vorstehend genannten "bestimmten Umstände", unter denen auch dann in einer Wiederbeschleunigungsphase ein Druckabbau vorgesehen ist, wenn der Rechner keinen Schlupf errechnet, sind insbesondere die folgenden:

1) Wenn das Rad bereits nach kurzen Druckaufbauzeiten wieder instabil wird,

2) der Druckabbau bereits relativ lange (z.B. 50 ms) erfolgte, und

3) wenn während der Wiederbeschleunigungsphase keine hohen absoluten Beschleunigungswerte (z.B. 5 g) auftreten.

In bevorzugten Ausgestaltungen der Erfindung ist deshalb vorgesehen, daß während einer Beschleunigungsphase des gebremsten Rades die gesamte Druckaufbau-Zeitspanne gemessen wird und dann, wenn diese Zeitspanne kürzer ist als ein vorgegebener Wert, die Bremsdruck-Absenkung auch dann erfolgt, wenn für das Rad kein Schlupf ermittelt wird.

In einer anderen bevorzugten Ausgestaltung des erfindungsgemässen Verfahrens ist vorgesehen, daß während einer Beschleunigung des gebremsten Rades die Zeitspanne gemessen wird, in der das Rad im instabilen Bereich der Reibbeiwert/Schlupf-Kurve läuft. Ebenso wird jeweils die Zeitspanne gemessen, in welcher das Rad im stabilen Bereich der Reibbeiwert/Schlupf-Kurve läuft. Diese Werte kann der Rechner der ABS-Regelanlage laufend abspeichern. Es wird dann während einer Beschleunigungsphase die Zeitspanne der Instabilität des Rades verglichen mit der vorhergegangenen Zeitspanne der Stabilität des Rades und die beiden Zeitspannen werden zueinander ins Verhältnis gesetzt (es wird der Quotient der Zeitspannen gebildet). Ist der Quotient größer als ein vorgegebener Wert (von z.B. 1), so erfolgt anschließend eine Bremsdruck-Absenkung auch dann, wenn für das Rad kein Schlupf ermittelt wird.

Weiterhin wird bevorzugt vorgesehen, daß während einer Beschleunigungsphase des gebremsten Rades die gesamte Druckabbau-Zeitspanne gemessen wird und dann, wenn diese Zeitspanne länger ist als ein vorgegebener Wert, die Bremsdruck-Absenkung auch dann erfolgt, wenn für das Rad kein Schlupf ermittelt wird.

Schließlich kann auch vorgesehen werden, daß während einer Beschleunigungsphase des gebremsten Rades in den vorgegebenen Zeitintervallen jeweils die Absolutwerte der Beschleunigung gemessen und mit einem vorgegebenen Beschleunigungswert verglichen werden und dann, wenn alle gemessenen Beschleunigungswerte kleiner sind als der vorgegebene Beschleunigungswert, die Bremsdruck-Absenkung auch dann erfolgt, wenn für das Rad kein Schlupf ermittelt wird.

Nachfolgend wird eine Ausführungsbeispiel der Erfindung anhand der Zeichnung näher erläutert. Es zeigt:

Fig. 1 über einer gemeinsamen Zeitskala den Verlauf der Umfangsgeschwindigkeit $v_{rad}$, der sogenannten Referenzgeschwindigkeit $v_{ref}$ und der Fahrzeuggeschwindigkeit $v_{Fz}$, sowie der zugehörigen Ventil-Stellungen und den Verlauf des Bremsdruckes; und

Fig. 2 ein Blockdiagramm einer Schaltung zum Durchführen eines erfindungsgemäßen Verfahrens.

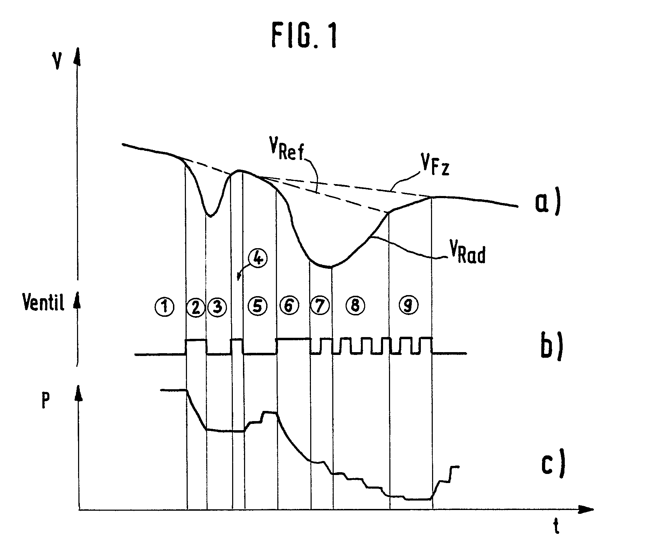

In Fig. 1 sind unterschiedliche Phasen mit 1, 2 ... und 9 bezeichnet. In den Phasen 1 und 5 läuft das gebremste Rad im ein gangs erläuterten stabilen Zustand, d.h. im optimalen Bereich der Reibbeiwert/-Schlupf-Kurve.

Während der Phasen 2 und 6 erfolgt ein geschlossener Druckabbau (also kein gepulster, sondern ein permanenter Druckabbau), da die Verzögerungsabnahme von Zeitintervall zu Zeitintervall (jeweils 10 ms) permanent geringer ist als ein vorgegebener Wert von z.B. 1 g/5 ms.

In der Phase 3 ist die Wiederbeschleunigung des Rades größer als ein vorgegebener Absolutwert und nimmt auch von Zeitintervall zu Zeitintervall hinreichend zu, so daß kein weiterer Druckabbau eingeleitet wird. In Fig. 1b befindet sich die Kurve deshalb im tieferliegenden Grundzustand, was bedeutet, daß das Druckabbauventil geschlossen ist. Ein geöffnetes Druckabbauventil wird durch die Stufe in Fig. 1b angezeigt.

In der Phase 4 ist die Wiederbeschleunigung zwar geringer, jedoch herrscht kein hinreichender Schlupf, so daß kein Druckabbau erfolgt.

In der Phase 7 ist die Abnahme der Drehverzögerung des Rades von Zeitintervall zu Zeitintervall zu gering, so daß ein gepulster Druckabbau erfolgt.

In der Phase 8 ist die Beschleunigung des Rades zu gering, genauer gesagt, die Beschleunigungszunahme, d.h. die Änderung der Drehgeschwindigkeit von Zeitintervall zu Zeitintervall ist geringer als ein vorgegebener Wert, so daß weiterhin ein gepulster Druckabbau vorgesehen ist, um die Drehgeschwindigkeit $v_{rad}$ des Rades schneller in den Bereich der Referenzgeschwindigkeit $v_{ref}$ zu bringen.

In der Phase 9 stellt der Rechner fest, daß folgende Bedingungen erfüllt sind:

1) Der Druckabbau erfolgt bereits relativ lange, nämlich länger als ein vorgegebener Wert von z.B. 50 ms. Das heißt, die Phasen 6, 7 und 8 dauern zusammmen länger als 50 ms.

2) Das Rad war bereits nach einer kurzen Druckaufbauzeit wieder instabil geworden, d.h. die Phase 5 war kürzer als die Phasen 6, 7 und 8 zusammen, und

3) die Wiederbeschleunigung in der unmittelbar vorangegangenen Phase 8 war geringer als ein vorgegebener Wert von z.B. 5 g.

Weil alle drei vorstehenden Bedingungen erfüllt sind, erfolgt in der Phase 9 ein weiterer Druckabbau.

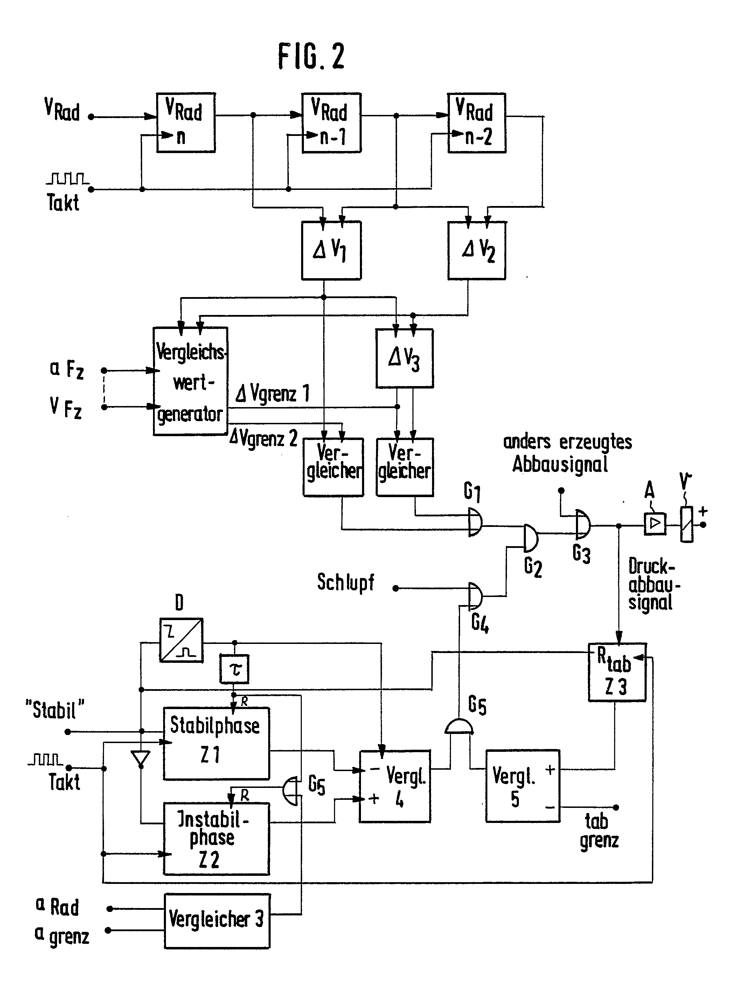

Fig. 2 zeigt ein Blockdiagramm einer Schaltung zum Durchführen des vorstehend beschriebenen Verfahrens.

Jedem genannten Zeitintervall von z.B. 10 ms entspricht ein Rechentakt. Mit jedem Rechentakt werden die Radumfangsgeschwindigkeiten (wie in Fig. 2 oben gezeigt) abgespeichert. Für das Intervall n also die Radumfangsgeschwindigkeit also $v_{radn}$, für das Intervall n-1 die Radumfangsgeschwindigkeit $v_{radn-1}$ und für das momentane Zeitintervall n-2 die Radumfangsgeschwindigkeit $v_{radn-2}$. Damit stehen an den Ausgängen der Funktionsblöcke $v_1$ und $v_2$ die Geschwindigkeitsdifferenzen zwischen zwei aufeinanderfolgenden Zeitintervallen an. Da der Takt von z.B. 10 ms konstant vorgegeben ist, ergibt die Geschwindigkeitsdifferenz auch direkt ein Maß für die Beschleunigung bzw. Verzögerung des gebremsten Rades.

Am Ausgang des Differenzbildners $v_3$ kann somit die Beschleunigungsänderung bzw. Verzögerungsänderung abgelesen werden.

Bei Radumfangsverzögerungen, die größer sind als ein vorgegebener Grenzwert $v_{grenz2}$ oder Beschleunigungen, die kleiner sind als diese Schwelle, erscheint am Ausgang des Vergleichers 1 ein "1"-Signal. Ist die Verzögerungsabnahme (oder. die Beschleunigungszunahme) kleiner als durch $v_{grenz1}$ vorgegeben, so erscheint am Ausgang des Vergleichers 2 ebenfalls ein "1"-Signal. Die Werte von $v_{grenz1}$ und $v_{grenz2}$ werden in einem Vergleichswertgenerator erzeugt und hängen davon ab, ob das Rad verzögert oder beschleunigt. Außerdem können diese Werte auch noch von der Fahrzeuggeschwindigkeit $v_{Fz}$ sowie der Fahrzeugberzögerung $a_{Fz}$ abhängig gemacht werden. Die Abhängigkeiten ermittelt der Fachmann für das gegebene Fahrzeug experimentell.

Die Ausgangssignale der Vergleicher 1 und 2 werden über das ODER-Glied $G_1$ verknüpft und steuern über das Gatter $G_3$ den Verstärker A und damit das Druckabbauventil V an, wenn am zweiten Eingang des Gatters $G_2$ ebenfalls ein "1"-Signal ansteht. Dieses 1"-Signal wird erzeugt, wenn bei hinreichendem Schlupf am ersten Eingang des Gatters $G_4$ ein Signal ansteht, oder wenn am Ausgang des Gatters $G_5$ ein "1"-Signal ansteht. Damit ein solches "1"-Signal ansteht, müssen folgende Bedingungen erfüllt sein:

Solange das gebremste Rad in instabilem Zustand läuft (was sich in bekannter Weise aus dessen Schlupf ergibt), wird ein Zähler $Z_2$ mit festem

Zeittakt hochgezählt. Läuft das Rad hingegen im stabilen Bereich, so wird ein Zähler $Z_1$ mit festem Zeittakt hochgezählt. Beim Übergang vom stabilen Bereich in den instabilen Bereich wird vom Differenzierer D ein Impuls erzeugt und die beiden Zählerstände werden im Vergleicher 4 abgespeichert. Nach einer bestimmten Verzögerungszeit werden die beiden Zähler wieder gelöscht und stehen für weitere Messungen zur Verfügung. Am Ausgang des Vergleichers erscheint nur dann ein "1"-Signal, wenn die Instabilitätsphase länger war als die Stabilitätsphase. Bei hohen Radumfangsbeschleunigungen, d.h. $a_{rad}\ a_{grenz}$, liefert der Verleicher 3 ein "1"-Signal; welches über das Gatter $G_6$ den Zähler $Z_2$ löscht. Damit wird erreicht, daß bei hohem Wiederbeschleunigungswerten die bis dahin aufgelaufene Instabilitätszeit gelöscht wird und die Stabilitätszeitspanne somit meist größer ist, d.h. am Ausgang des Vergleichers 4 erscheint eine "0". Steht am Ausgang jedoch eine "1" an und liefert der Vergleicher 5 ebenfalls ein "1"-Signal, weil die im Zähler $Z_3$ ermittelte Druckabbauzeit bereits größer ist als ein vorgegebener Vergleichswert $tab_{grenz}$, so steht auch am Ausgang des Gatters $G_5$ ein "1"-Signal an und die durch den Ausgang des Gatters $G_+$ gesteuerten Druckabbausignale werden auch ohne errechneten Schlupf des gebremsten Rades wirksam.

**Ansprüche**

1. Verfahren zum Regeln des Bremsdruckes in einer blockiergeschützten Fahrzeug-Bremsanlage, bei dem das Drehverhalten eines gebremsten Rades gemessen und in Abhängigkeit davon der Bremsdruck geändert wird,
dadurch **gekennzeichnet,**
- daß nach Einleitung einer Bremsung jeweils nach vorgegebenen Zeitintervallen die Drehverzögerung des gebremsten Rades bestimmt und mit der im vorangegangenen Zeitintervall gemessenen Drehverzögerung verglichen wird,
- daß dann, wenn der Vergleich ergibt, daß sich die Drehverzögerung im zuletzt abgelaufenen Zeitintervall gegenüber derjenigen im vorangegangenen Zeitintervall um weniger als einen vorgegebenen Wert verringert hat, während zumindest eines Teils des nachfolgenden Zeitintervalls der Bremsdruck abgesenkt wird, und
- daß dann, wenn der Vergleich ergibt, daß sich die Drehverzögerung im zuletzt abgelaufenen Zeitintervall gegenüber derjenigen im vorangegangenen Zeitintervall um mehr als einen vorgegebenen Wert verringert hat, die Absenkung des Bremsdruckes beendet wird.

2. Verfahren zum Regeln des Bremsdruckes in einer blockiergeschützten Fahrzeug-Bremsanlage, bei dem das Drehverhalten eines gebremsten Rades gemessen, und in Abhängigkeit davon der Bremsdruck geändert wird,
dadurch **gekennzeichnet,**
- daß nach Einleitung einer Bremsung jeweils nach vorgegebenen Zeitintervallen die Drehbeschleunigung des gebremsten Rades bestimmt und mit der während zumindest eines vorangegangenen Zeitintervalls gemessenen Drehbeschleunigung verglichen wird, und
- daß dann, wenn der Vergleich ergibt, daß der Absolutwert der Beschleunigung des Rades im zuletzt abgelaufenen Zeitintervall kleiner ist als ein vorgegebener Wert und/oder sich vom Beschleunigungswert im vorangegangenen Zeitintervall um weniger als einen vorgegebenen Wert unterscheidet, der Bremsdruck während zumindest eines Teils des nachfolgenden Zeitintervalls abgesenkt wird.

3. Verfahren nach Anspruch 1 oder 2,
dadurch **gekennzeichnet,**
daß die Absenkung des Bremsdruckes nur dann erfolgt, wenn der Schlupf des Rades größer ist als ein vorgegebener Wert.

4. Verfahren nach Anspruch 2,
dadurch **gekennzeichnet,**
daß während einer Beschleunigungsphase des gebremsten Rades die gesamte Druckaufbau-Zeitspanne gemessen wird und dann, wenn diese Zeitspanne kürzer ist als ein vorgegebener Wert, die Bremsdruck-Absenkung auch dann erfolgt, wenn für das Rad kein Schlupf ermittelt wird.

5. Verfahren nach Anspruch 2,
dadurch **gekennzeichnet,**
daß während einer Beschleunigungsphase des gebremsten Rades die Zeit der Instabilität des Rades gemessen und mit der vorangegangenen Zeit der Stabilität des Rades verglichen wird, daß die so gemessenen Zeitspannen der Instabilität und der Stabilität des Rades zueinander ins Verhältnis gesetzt werden und daß dann, wenn dieses Verhältnis größer ist als ein vorgegebener Wert, die Bremsdruckabsenkung auch dann erfolgt, wenn für das Rad kein Schlupf ermittelt wird.

6. Verfahren nach Anspruch 2,
dadurch **gekennzeichnet,**
daß während einer Beschleunigungsphase des gebremsten Rades in den vorgegebenen Zeitintervallen jeweils die Absolutwerte der Beschleunigung gemessen und mit einem vorgegebenen Beschleunigungswert verglichen werden und dann, wenn alle gemessenen Beschleunigungswerte kleiner sind als der vorgegebene Beschleunigungswert, die Bremsdruck-Absenkung auch dann erfolgt, wenn für das Rad kein Schlupf ermittelt wird.

EP 0 338 414 A2

Lucas Ind. p.l.c.
EP-63 627

# FIG. 1

FIG. 2